Europäisches Patentamt

European Patent Office

Office européen des brevets

(19)

(11) Veröffentlichungsnummer: **0 266 479**
**B1**

(12) **EUROPÄISCHE PATENTSCHRIFT**

(45) Veröffentlichungstag der Patentschrift:
04.07.90

(21) Anmeldenummer: 87103295.9

(22) Anmeldetag: 07.03.87

(51) Int. Cl.⁵: **F16F 15/12, F16F 15/16**

(54) Torsionsschwingungsdämpfer mit integriertem Schrumpfring.

(30) Priorität: 07.11.86 DE 3638097

(43) Veröffentlichungstag der Anmeldung:
11.05.88 Patentblatt 88/19

(45) Bekanntmachung des Hinweises auf die Patenterteilung:
04.07.90 Patentblatt 90/27

(84) Benannte Vertragsstaaten:
DE FR GB IT

(56) Entgegenhaltungen:
EP-A- 0 218 774
DE-A- 2 640 752
DE-A- 2 754 802
DE-U- 8 534 294
DE-U- 8 535 983

PATENT ABSTRACTS OF JAPAN
PATENT ABSTRACTS OF JAPAN Band 8,
Nr. 154 (M-310)(1591) 18. Juli 1984; &
JP-A-59 50245 (SHIYOUICHI IWAMOTO) 23.03.1984

(73) Patentinhaber: **Firma Carl Freudenberg, Höhnerweg 2-4,
D-6940 Weinheim/Bergstrasse(DE)**

(72) Erfinder: **Andrä, Rainer, Dr., Dehrner Strasse 19,
D-6250 Limburg(DE)**
Erfinder: **Engemann, Günter, Ahornweg 5,
D-6149 Rimbach 3(DE)**

## Beschreibung

Die Erfindung betrifft einen Torsionsschwingungsdämpfer nach dem Oberbegriff von Anspruch 1.

Ein Torsionsschwingungsdämpfer dieser Art ist aus der DE-B 2 640 752 bekannt. Der Führungsring wird dabei durch sich in radialer Richtung erstreckende Einlagen gebildet, welche aus Fertigungsgründen in einem sich in Umfangsrichtung erstreckenden Band zusammengeschlossen sind. Dieses ist fest in den Federkörper eingebunden. Damit sich bei der Verformung durch Hubkräfte in Umfangsrichtung keine Versteifung ergibt, sind die axial verlaufenden Knickstellen des Bandes geschwächt und/oder als Sollbruchstellen ausgebildet, die während des Betriebes aufbrechen. Die anschließend vorhandenen, schneidenartigen Bruchkanten können indessen im Dauerbetrieb des Torsionsschwingungsdämpfers zu einer Beschädigung des Federkörpers führen, was neben einer verminderten Gebrauchsdauer des Torsionsschwingungsdämpfers auch eine Beeinträchtigung der Radialführung des Schwungringes zur Folge hat. Des weiteren ist die Herstellung und rotationssymmetrische Einbettung des mäanderförmig verlaufenden Bandes in den aus gummielastischem Material bestehenden Federkörper kompliziert und teuer.

Aus der DE-A 2 754 802 ist ein Viskositätsreibungsdämpfer bekannt, bei dem der Nabenring mit einer die Drehachse konzentrisch umschließenden Ausnehmung versehen ist, in welcher der Schwungring enthalten und schwebend in ein viskoses Reibungsmittel eingebettet ist. Die Ausnehmung ist allseitig von unnachgiebigen Flächen des Nabenringes begrenzt und in axialer Richtung durch einen separat erzeugten und nachträglich angebrachten Deckel verschlossen. Die Herstellung eines solchen Viskositätsreibungsdämpfers ist dementsprechend aufwendig und teuer. Zusätzlich erfährt der Schwungring in radialer Richtung nur eine unzureichende Führung durch den Nabenring.

Eine ähnlich der vorstehend beschriebenen gestaltete Ausführung eines Viskositätsreibungsdämpfers ist aus der JP-A 59 050 245 bekannt. Der in einer starr umgrenzten Ausnehmung des Nabenringes gelagerte Schwungring ist hierbei innenseitig mit einer Beschichtung aus Gummi versehen, um in bezug auf den Nabenring eine verbesserte Radialführung zu erzielen. Durch die schwebende Lagerung des Schwungringes ist das diesbezügliche Ergebnis gleichwohl unzureichend, und die Anbringung der Gummischicht erfordert einen nochmals vergrößerten Aufwand bei der Herstellung.

Der Erfindung liegt die Aufgabe zugrunde, einen einfach herstellbaren Torsionsschwingungsdämpfer zu zeigen, bei dem eine präzise gegenseitige Zuordnung des Schwungringes zu dem Nabenring in axialer und in radialer Richtung gewährleistet ist. Der Torsionsschwingungsdämpfer soll problemlos für den Dauerbetrieb geeignet sein und exakt definierte Dämpfungseigenschaften besitzen, die während seiner gesamten Gebrauchsdauer keine nennenswerten Veränderungen erfahren.

Diese Aufgabe wird erfindungsgemäß bei einem Torsionsschwingungsdämpfer der eingangs genannten Art mit den kennzeichnenden Merkmalen des Patentanspruches 1 gelöst. Auf vorteilhafte Ausgestaltungen nehmen die Unteransprüche Bezug.

Die in den Federkörper des erfindungsgemäßen Torsionsschwingungsdämpfers lose eingebetteten Führungsringe sind von einfacher und robuster Gestalt, was eine problemlose Einbringung in den Werkstoffkörper während der Herstellung des Federkörpers gestattet. Sie können je nach Ausführung in bereits fertiger Form in Handel erhalten werden oder durch Ablängen von einem säulenförmigen Vormaterial. Ringelemente einer ähnlichen Gestalt haben in der Vergangenheit auf außerhalb der vorliegenden Erfindung liegenden Gebieten vielfältige Anwendung gefunden. Auch die Beschaffung von Führungsringen mit spezifischen Eigenschaften bereitet daher im allgemeinen keine Schwierigkeiten, beispielsweise die Beschaffung von Ausführungen, die eine reibungsvermindernd ausgerüstete Oberfläche haben oder die aus einem Werkstoff eines besonders hohen linearen Wärmeausdehnungskoeffizienten bestehen. Die Eigenschaften des erfindungsgemäßen Torsionsschwingungsdämpfers lassen sich dadurch sehr leicht modifizieren und den besonderen Gegebenheiten des Anwendungsfalles anpassen. Dennoch lassen sich auch in der Massenproduktion gleichbleibende Eigenschaften bei einer jeden erzeugten Einheit gewährleisten.

Um zu verhindern, daß Verunreinigungen in den Bereich der relativ zueinander beweglichen Flächen des Führungsringes und des Federkörpers gelangen, hat es sich als vorteilhaft bewährt, wenn das Profil des Führungsringes auf allen Seiten von undurchlässigen Teilen des Federkörpers umschlossen ist. Die technischen Eigenschaften des neuwertigen Torsionsschwingungsdämpfers bleiben hierdurch auch in einer stark durch Schmutz belasteten Umgebung langfristig erhalten.

Insbesondere in bezug auf die Verwendung des erfindungsgemäßen Torsionsschwingungsdämpfers im Bereich des Antriebsstranges von Kraftfahrzeugen ist dieser Vorteil von einer hervorzuhebenden Bedeutung.

Um eine gute radiale und axiale Führung des Schwungringes auf dem Nabenring zu erhalten, genügt im einfachen Falle die Verwendung eines einzigen Führungsringes von rechteckigem Profil. Dieser kann gegebenenfalls unter Erzeugung einer radialen Vorspannung auf den Nabenring aufgepreßt sein, was eine rotationssymmetrische Zuordnung zu der Rotationsachse gewährleistet und es nachfolgend erleichtert, Unwuchtigkeiten des durch den Führungsring geführten Schwungringes zu verhindern.

Die Verwendung von Führungsringen mit einem abweichenden und insbesondere einem kreisförmig begrenzten Profil ist ebenfalls möglich und ergibt bei befriedigendem Betriebsverhalten des fertigen Torsionsschwingungsdämpfers eine Reduzierung des Gewichtes. Weitere Verbesserungen lassen sich durch Hohlräume in dem Führungsring erzielen. Sie setzen indessen die Verwendung eines Werkstoffes von ausreichender Tragfähigkeit bei der Erzeugung desselben voraus.

Das Verhältnis aus der radialen Erstreckung des Federkörpers und der maximalen radialen Erstreckung des Führungsringes soll etwa 1,1 bis 1,6 betragen. In Fällen, in denen der Führungsring rotationssymmetrisch ausgebildet, ist, ergibt sich hinsichtlich des festgelegten Wertes auf dem gesamten Umfang keine Änderung.

In Fällen, in denen die in radialer Richtung nach außen und/oder in radialer Richtung nach innen weisenden Begrenzungsflächen des Führungsringes den radial gegenüberliegenden Begrenzungsflächen des Spaltes in wechselnden Abständen zugeordnet sind, sind hingegen die Stellen der größten Annäherung an die äußere und die innere Begrenzungsfläche des Ringspaltes auf eine gemeinsame Radialebene zu projizieren und der Ermittlung des Maximalwertes zugrunde zu legen. Eine entsprechend enge Annäherung des Führungsringes an den Schwungring und den Nabenring soll an wenigstens 3 gleichmäßig auf dem Umfang verteilten Stellen vorhanden sein, wobei die innen- und außenseitige Annäherung natürlich relativ zueinander in Umfangsrichtung verschoben sein kann.

Bei Torsionsschwingungsdämpfern von besonders großer axialer Baulänge empfiehlt sich, einen axial geteilten Führungsring derart in den Federkörper einzubetten, daß die beiden Teile des Führungsringes einen möglichst großen axialen Abstand voneinander haben. Auch bei Verkantungsbeanspruchungen des Torsionsschwingungsdämpfers ist so eine gleichbleibende, gegenseitige Zuordnung zwischen dem Naben- und dem Schwungring gewährleistet.

Für die Herstellung des Federkörpers können alle einschlägig bekannten, gummielastischen Werkstoffe verwendet werden und insbesondere solche auf Kautschuk- oder Polyurethanbasis. Diese haben in bezug auf die Oberflächen fester Körper einen relativ hohen Reibungsbeiwert, weshalb es sich empfiehlt, die Oberfläche des Führungsringes bei Bedarf besonders zu glätten und/oder mit einer reibungsvermindernden Substanz zu beschichten, um die relative Beweglichkeit zu verbessern.

Bei Verwendung eines Werkstoffes zu Herstellung des Federkörpers, der durch Erhitzung vulkanisiert wird, hat es sich als vorteilhaft bewährt, wenn ein Führungsring aus einem Werkstoff zur Anwendung gelangt, der einen linearen Wärmeausdehnungskoeffizienten aufweist, welcher demjenigen des ihn umschließenden, gummielastischen Werkstoffes des Federkörpers in etwa entspricht. Die nach der Vulkanisierung des gummielastischen Werkstoffes eintretende Abkühlung führt zu einer Schrumpfung des Werkstoffes des Federkörpers und des Werkstoffes des Führungsringes, was zur Ausbildung eines Spaltes zwischen beiden führt. Die relative Beweglichkeit des Federkörpers in bezug auf den Führungsring ist hierdurch verbessert. Der Spalt kann gegebenenfalls mit einer Flüssigkeit gefüllt werden, um die relative Beweglichkeit zwischen dem Führungsring und dem Federkörper auf einen spezifischen Wert einzustellen. Hinsichtlich der Auswahl der Flüssigkeit können insofern sowohl reibungsvermindernde als auch reibungserhöhende Substanzen zur Anwendung gelangen. Der Führungsring besteht im Regelfalle aus metallischen Werkstoffen. Kunststoffe lassen sich in bezug auf eine Verbesserung der relativen Beweglichkeit des Führungsringes ausgezeichnet verwenden und insbesondere PTFE oder Polyamid.

Die Erfindung wird nachfolgend anhand der als Anlage beigefügten Zeichnungen weiter erläutert. Es zeigen:

Figuren 1 und 2 zwei beispielhafte Ausführungen des erfindungsgemäßen Torsionsschwingungsdämpfers in halbgeschnittener Darstellung.

Figur 3 den in Figur 1 gezeigten Torsionsschwingungsdämpfer in halbgeschnittener Darstellung von vorn.

Figuren 4 bis 7 alternative Ausführungen des erfindungsgemäßen Torsionsschwingungsdämpfers in halbgeschnittener Ansicht von vorn.

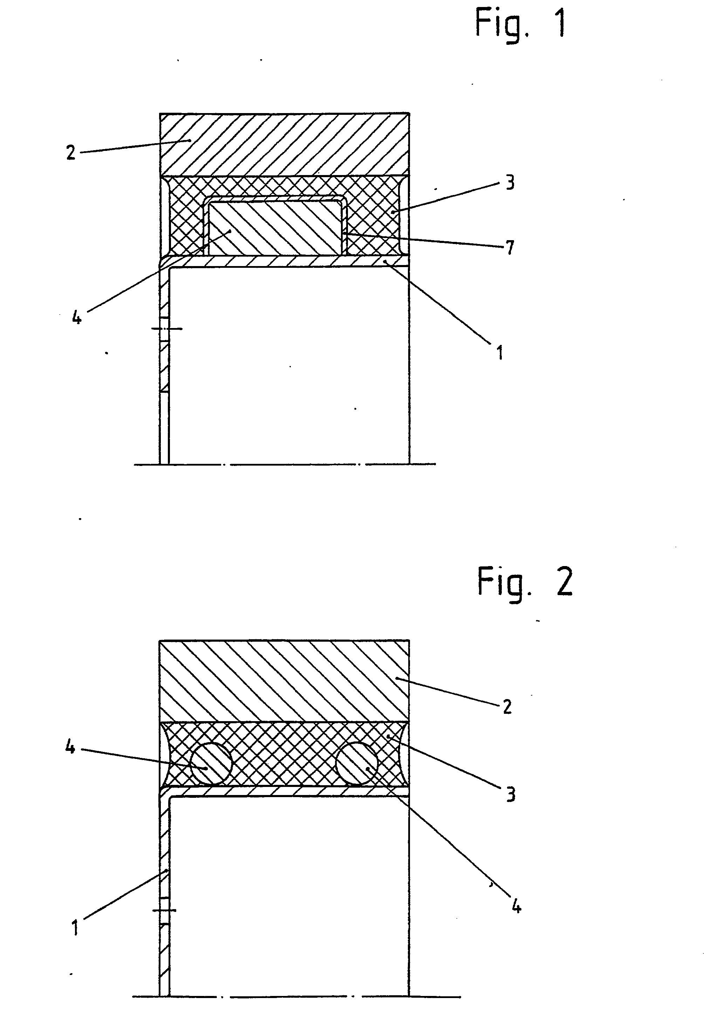

Der in Figure 1 gezeigte Torsionsschwingungsdämpfer umfaßt den Nabenring 1 und den Schwungring 2, die einander koaxial umschließen und einen dazwischenliegenden Ringspalt innen- und außenseitig begrenzen. In dem Ringspalt ist ein ringförmig ausgebildeter, gummielastischer Federkörper 3 enthalten, der durch Vulkanisation adhäsiv sowohl an dem Nabenring 1 als auch an dem Schwungring 2 festgelegt ist. Der Federkörper 3 besteht aus hitzevulkanisiertem Gummi. Er umschließt das rechteckige Profil des rotationssymmetrisch ausgebildeten Führungsringes 4 auf allen Seiten. Letzterer besteht aus Polyamid und hat einen linearen Wärmeausdehnungkoeffizienten, der denjenigen des den Führungsring umschließenden Körpers übertrifft. Durch die im Anschluß an die Vulkanisierung des Federkörpers 3 eintretende Abkühlung ergibt sich ein Spalt zwischen dem Federkörper 3 und dem Führungsring 4, was die relative Beweglichkeit in Umfangsrichung verbessert. Der Innenumfang des Führungsringes 4 ist fest an den Außenumfang des Nabenringes 1 angepreßt. Seine Außenseite ist dadurch der Rotationsachse des Torsionsschwingungsdämpfers bei relative einfacher Montierbarkeit konzentrisch zugeordnet, was eine gute Radialführung des Schwungringes 2 gewährleistet und das Auftreten von Unwuchtigkeiten verhindert.

Bei der in Figur 2 gezeigten Ausführung wird der Schwungring 2 durch zwei Führungsringe 4 von dem Nabenring 1 geführt. Die beiden Führungsringe 4 haben ein kreisringförmig begrenztes Profil bei rotationssymmetrischer Gestalt. Sie sind in größtmöglichem gegenseitigem, axialem Abstand auf dem Außenumfang des Nabenringes 1 angeordnet. Sie bestehen beide aus PTFE, wodurch sich eine ausgezeichnete Relativbeweglichkeit des Federkörpers 3 in Umfangsrichtung ergibt. Der Federkörper 3 besteht auch in diesem Falle aus hitzevulkanisiertem Gummi, welches einen kleineren Wärmeausdehnungskoeffizienten aufweist als der die Führungsringe 4 bildende Werkstoffkörper.

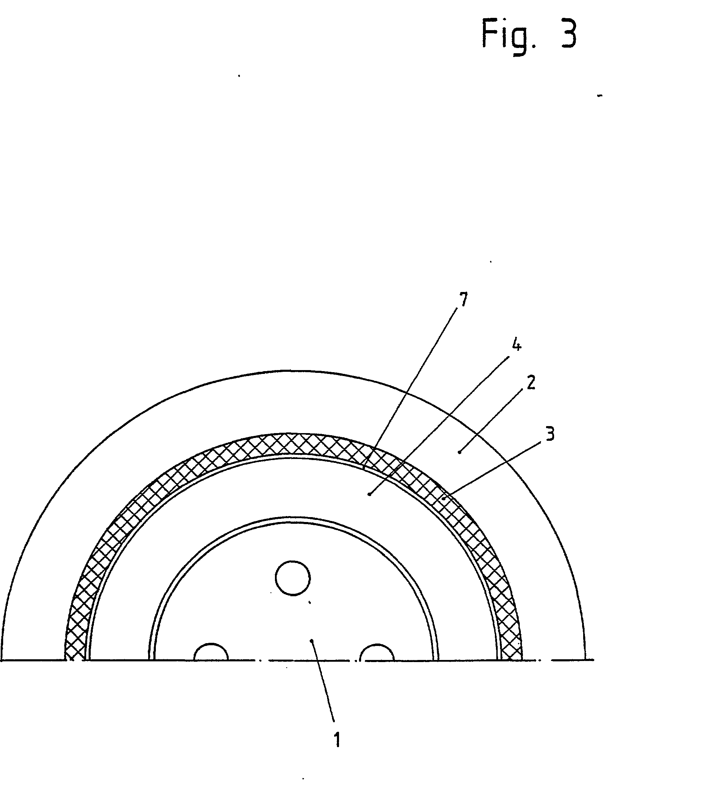

In Figur 3 wird der Torsionsschwingungsdämpfer nach Figur 1 in halbgeschnittener Ansicht von vorn gezeigt. Es ist deutlich zu erkennen, daß der Führungsring 4 von rotationssymmetrischer Gestalt und der Innenseite des Schwungringes 2 auf dem gesamten Umfang bis auf einen gleichbleibenden, sehr geringen Abstand angenähert ist. Im Bereich des Abstandes ist lediglich der Spalt 7 und ein schmaler Steg des Federkörpers 3 vorhanden. Neben einer Verbesserung der Relativbeweglichkeit in Umfangsrichtung wird hierdurch ein gewisser Schutz der einander gegenüberliegenden Oberflächen des Führungsringes und des Schwungringes 2 vor mechanischen Beschädigungen erreicht.

Der Nabenring 1 besteht aus einem Anschlußteil aus Stahlblech, welches die Verschraubung des Torsionsschwingungsdämpfers mit einem drehenden Maschinenteil erlaubt.

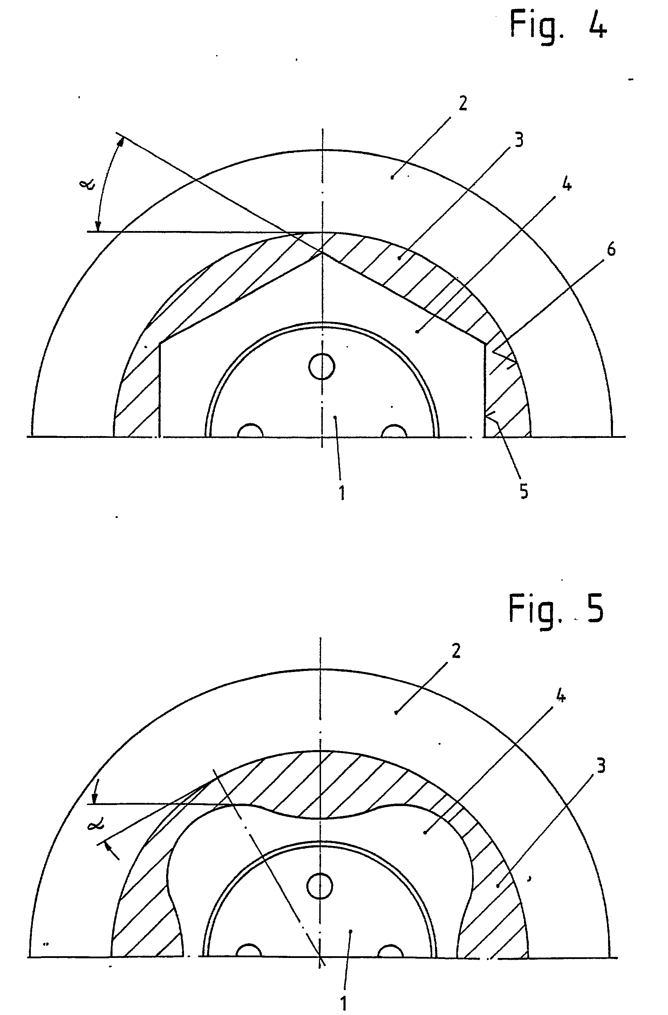

Die in den Figuren 4 bis 7 gezeigten Ausführungen unterscheiden sich von den vorstehend beschriebenen durch eine nicht rotationssymmetrische Ausbildung des Führungsringes. Letzterer ist in den Fällen der Ausführung nach den Figuren 4, 5 und 7 innenseitig durch eine Zylinderfläche begrenzt, die unter einer elastischen Vorspannung an der Außenseite des Nabenringes 1 anliegt. Unter normalen Betriebsbedingungen erfahren die Führungsringe 4 hierdurch keine nennenswerte Relativverlagerung in Umfangsrichtung.

Außenseitig sind die Führungsringe 4 durch Oberflächen begrenzt, die in den auf dem Umfang verteilten Teilbereichen unterschiedlich großer Abstände von der ihnen radial gegenüberliegenden Oberfläche des Schwungringes 2 haben. Dabei sind in allen Fällen Teilbereiche vorhanden, die mit der sie radial umschließenden Begrenzungsfläche des Außenringes einen spitzen Winkel $\alpha$ einschließen. Hierdurch ergibt sich in Abhängigkeit von der Größe der Verdrehamplitude des Nabenringes 1 in bezug auf den Schwungring 2 eine progressiv ansteigende Dämpfungswirkung, was für viele Anwendungsfälle von Vorteil ist.

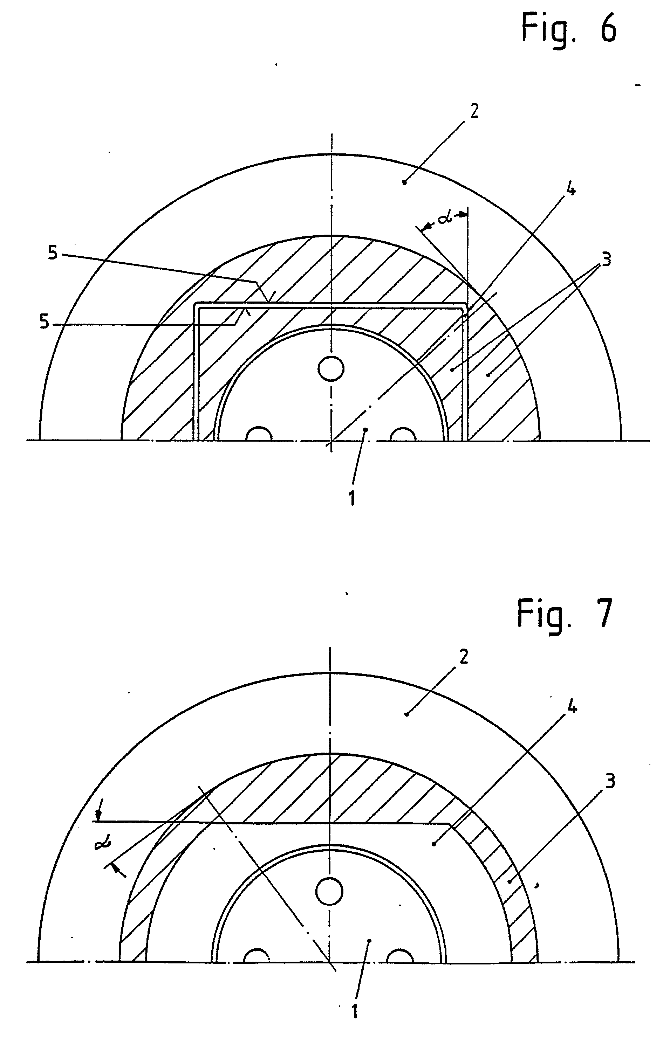

Der Winkel $\alpha$ kann in Umfangsrichtung derart variiert sein, daß aneinander anschließende Teilflächen ohne plötzliche Richtungsänderung wellenförmig ineinander übergehen. Eine solche Ausführung wird in Figur 5 gezeigt. Sie ist in mechansicher Hinsicht besonders robust.

Bei der in Figur 6 gezeigten Ausführung besteht der Führungsring 4 aus einem Abschnitt eines Rohres von quadratischem Grundriß ,das in den in Umfangsrichtung aneinander anschließenden Teilbereichen abwechselnd an den Nabenring 1 und an Schwungring 2 angenähert ist. Bei besonders einfacher Herstellbarkeit und einem besonders geringen Gewicht ergibt sich hierdurch eine ausgezeichnete Führung des Schwungringes 2 auf dem Nabenring 1 in radialer Richtung sowie eine besonders stark progressive Federkennung in Abhängigkeit von der Größe der Relativverdrehung. Die Ausführung ist besonders für die Dämpfung von Drehschwingungen kleiner Amplitude geeignet. Hinsichtlich der gegenseitigen Zuordnung zur Stützfläche 5 zu den ihnen radial gegenüberliegenden Begrenzungsflächen des Nabenringes 1 und des Schwungringes 2 gelten die vorstehenden Ausführungen. Der Federkörper 3 umschließt den Führungsring 4 sowohl innen- als auch außenseitig. Er ist durch Vulkanisierung unlösbar mit dem Nabenring und dem Schwungring verbunden.

## Patentansprüche

1. Torsionsschwingungsdämpfer, umfassend einen Naben- und einen Schwungring (1, 2), die einander koaxial umschließen und einen dazwischenliegenden Ringspalt innen- und außenseitig begrenzen, wobei in dem Ringspalt ein ringförmig ausgebildeter, gummielastischer Federkörper (3) angeordnet ist, mit einem darin eingeschlossenen Führungsring (4), der wenigstens in gleichmäßig verteilten Abständen in Umfangsrichtung dicht an den Naben- und den Schwungring angenähert ist, dadurch gekennzeichnet, daß der Federkörper (3) den Führungsring (4) lose umschließt.

2. Torsionsschwingungsdämpfer nach Anspruch 1, dadurch gekennzeichnet, daß der Führungsring (4) rotationssymmetrisch ausgebildet ist.

3. Torsionsschwingungsdämpfer nach Anspruch 1 bis 2, dadurch gekennzeichnet, daß der Führungsring (4) wenigstens außenseitig durch Stützflächen (5) mit Teilbereichen begrenzt ist, die mit den radial gegenüberliegenden Begrenzungsflächen (6) des Ringspaltes einen spitzen Winkel einschließen.

4. Torsionsschwingungsdämpfer nach Anspruch 3, dadurch gekennzeichnet, daß der Winkel in Umfangsrichtung derart variiert ist, daß aneinander anschließende Teilflächen ohne plötzliche Richtungsänderung wellenförmig ineinander übergehen.

5. Torsionsschwingungsdämpfer nach Anspruch 3 bis 4, dadurch gekennzeichnet, daß der Führungsring (4) innen- und außenseitig durch Stützflächen (5) begrenzt ist und daß sich die Stützflächen (5) parallel zueinander erstrecken.

6. Torsionsschwingungsdämpfer nach Anspruch 1 bis 5, dadurch gekennzeichnet, daß der Führungsring (4) eine besonders geglättete Oberfläche aufweist.

7. Torsionsschwingungsdämpfer nach Anspruch 6, dadurch gekennzeichnet, daß die Oberfläche mit einer reibungsvermindernden Substanz beschichtet ist.

8. Torsionsschwingungsdämpfer nach Anspruch 1 bis 7, dadurch gekennzeichnet, daß der Führungsring (4) aus PTFE oder Polyamid besteht.

9. Torsionsschwingungsdämpfer nach Anspruch 1 bis 8, dadurch gekennzeichnet, daß zwischen dem Federkörper (3) und dem Führungsring (4) ein Spalt (7) vorhanden ist.

10. Torsionsschwingungsdämpfer nach Anspruch 9, dadurch gekennzeichnet, daß der Spalt (7) mit einer Flüssigkeit gefüllt ist.

## Revendications

1. Amortisseur vibrations de torsion comprenant une bague de moyeu (1) et une bague vibrante (2) disposées coaxialement l'une par rapport à l'autre et délimitant entre elles intérieurement et extérieurement un jeu annulaire, tandis qu'un corps élastique (3) en matériau élastique à base de caoutchouc et de forme annulaire est disposé dans le jeu annulaire avec une bague de guidage (4) qui y est insérée et qui se rapproche au moins à des intervalles répartis régulièrement sur la périphérie à proximité de la bague de moyeu et de la bague vibrante, caractérisé en ce que le corps élastique (3) entoure la bague de guidage (4) sans y être fixé.

2. Amortisseur de vibrations de torsion selon la revendication 1, caractérisé en ce que la bague de guidage (4) présente une symétrie de rotation.

3. Amortisseur de vibrations de torsion selon chacune des revendications 1 et 2, caractérisé en ce que la bague de guidage (4) est délimitée, au moins extérieurement, par des surfaces d'appui (5) avec des zones partielles qui forment un angle aigu avec les surfaces radialement opposées (6) du jeu annulaire.

4. Amortisseur de vibrations de torsion selon la revendication 3, caractérisé en ce que l'angle varie en direction de la périphérie, de façon à ce que les surfaces partielles voisines se succèdent l'une à l'autre en forme d'ondes et sans modification brusque de direction.

5. Amortisseur de vibrations de torsion selon les revendications 3 et 4, caractérisé en ce que la bague de guidage (4) est délimitée intérieurement et extérieurement par des surfaces d'appui (5) et que les surfaces d'appui (5) sont disposées parallèlement l'une à l'autre.

6. Amortisseur de vibrations de torsion selon les revendications 1 à 5, caractérisé en ce que la bague de guidage (4) présente une surface particulièrement lisse.

7. Amortisseur de vibrations de torsion selon la revendication 6, caractérisé en ce que la surface est recouverte d'une substance diminuant le frottement.

8. Amortisseur de vibrations de torsion selon les revendications 1 à 7, caractérisé en ce que la bague de guidage (4) est constituée de PTFE ou de polyamide.

9. Amortisseur de vibrations de torsion selon les revendications 1 à 8, caractérisé en ce qu'il existe un jeu (7) entre le corps élastique (3) et la bague de guidage (4).

10. Amortisseur de vibrations de torsion selon la revendication 9, caractérisé en ce que le jeu (7) est rempli d'un liquide.

**Claims**

1. A torsional vibration damper, comprising a hub ring and a flywheel ring (1, 2), which surround each other coaxially and bound on the inside and the outside an annular gap lying between them, a rubber-elastic spring body (3) of annular construction being arranged in the annular gap, and having a guide ring (4) enclosed therein, which guide ring, at least at evenly distributed distances in the circumferential direction, is closely adjacent to the hub ring and the flywheel ring, characterized in that the spring body (3) loosely surrounds the guide ring (4).

2. A torsional vibration damper as claimed in claim 1, characterized in that the guide ring (4) is of rotationally symmetrical construction.

3. A torsional vibration damper as claimed in any of claims 1 to 2, characterized in that the guide ring (4) is bounded, at least on the outside, by support surfaces (5) with partial regions which enclose an acute angle with the radially opposite limiting surfaces (6) of the annular gap.

4. A torsional vibration damper as claimed in claim 3, characterized in that the angle is varied in the circumferential direction in such a way that mutually adjoining partial surfaces merge into one another in an undulating manner without sudden change in direction.

5. A torsional vibration damper as claimed in any of claims 3 to 4, characterized in that the guide ring (4) is bounded on the inside and the outside by support surfaces (5), and in that the support surfaces (5) extend in parallel.

6. A torsional vibration damper as claimed in any of claims 1 to 5, characterized in that the guide ring (4) has a particularly smoothed surface.

7. A torsional vibration damper as claimed in claim 6, characterized in that the surface is coated with a friction-reducing substance.

8. A torsional vibration damper as claimed in any of claims 1 to 7, characterized in that the guide ring (4) is composed of PTFE or polyamide.

9. A torsional vibration damper as claimed in any of claims 1 to 8, characterized in that there is a gap (7) between the spring body (3) and the guide ring (4).

10. A torsional vibration damper as claimed in claim 9, characterized in that the gap (7) is filled with a liquid.

Fig. 1

Fig. 2

Fig. 3

Fig. 4

Fig. 5

Fig. 6

Fig. 7